# EUROPEAN PATENT APPLICATION

(11) **EP 4 438 925 A1**
(43) Date of publication of application: **02.10.2024**
(21) Application number: 24165973.9
(22) Date of filing: 25.03.2024
(51) Int. Cl.: F16J 15/02, F16J 15/06, B29L 31/26

(54) **BULB SEALS AND METHODS OF MANUFACTURING THE SAME**

(30) Priority: 28.03.2023 US 202363455136 P
(71) Applicant: Corning Research and Development Corporation, Corning, NY 14831 (US)
(72) Inventor: KUBIAK, Tomasz Mateusz, 90-049 Lodz (PL)
(74) Representative: Elkington and Fife LLP

(57) **Abstract**

A method for manufacturing a seal comprises molding a material into an unclosed seal, the unclosed seal comprising a first leg (120) and a second leg (130) connected via a connecting portion (140), wherein a distal end of each of the first leg and the second leg are spaced from one another; and removing the unclosed seal from the mold, wherein the first leg and the second leg are configured to be connected to form a bulb seal (100).

## Description

### RELATED APPLICATIONS

This application claims the benefit of priority of U.S. Provisional Application Serial No. 63/455,136 filed on March 28, 2023, the content of which is relied upon and incorporated herein by reference in its entirety.

### FIELD

The present specification generally relates to bulb seals and methods of manufacturing the same and, in particular, methods of manufacturing and bulb seals that are initially manufactured in an open seal configuration which is later closed.

### BACKGROUND

Many industries, such as the telecom industry, use seals for keeping particles, e.g., dust, water, and air from entering spaces occupied by, e.g., electronic devices, wiring, or circuitry to ensure that such particles do not interfere with the contents of the sealed spaces. Reliability of function of devices, wiring, or circuitry may be crucial to the intended use or function of the devices, and a predictor of reliability may often be the quality of the seal.

Some methods of forming seals include creating pour-in-place foam gaskets, or extruded hollow profile gaskets. However, pour-in-place gaskets may generally offer low compression forces while requiring very specific and space-consuming designs and expensive manufacturing machinery. Extruded hollow profile gaskets may have high ranges of compression and be space effective, but extruded hollow profile gaskets may require a high monetary cost (e.g., per foot of a length of the seal) due to equipment and space costs associated with manufacturing.

Accordingly, a need exists for alternative methods of manufacturing a seal that behaves like an extruded bulb gasket but is possible to manufacture using injection or compression molding.

### SUMMARY

Embodiments of the present disclosure are directed to bulb seals and methods of manufacturing the same that provide for improved manufacturing.

In a first embodiment, a method for manufacturing a seal comprises molding a material into an unclosed seal, the unclosed seal comprising a first leg and a second leg connected via a connecting portion, wherein a distal end of each of the first leg and the second leg are spaced from one another; and removing the unclosed seal from the mold, wherein the first leg and the second leg are configured to be brought to together to form a bulb seal.

In another embodiment, a method of manufacturing a seal includes molding a material into an unclosed seal via compression molding, the unclosed seal comprising a first leg and a second leg connected via a connecting portion, wherein a distal end of each of the first leg and the second leg are spaced from one another; removing the unclosed seal from the mold; and connecting the first leg and the second leg to form a bulb seal.

In yet another embodiment, a bulb seal includes a first leg and a second leg connected to the first leg via a connecting portion. The first leg and the second leg are movable from an unclosed configuration in which a distal end of the first leg is uncoupled to the second leg and a closed configuration in which the distal end of the first leg is coupled to the second leg, thereby defining a bulb seal retention portion and a bulb portion.

Additional features and advantages of the bulb seals and methods of manufacturing the same described herein will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIG. 1A schematically depicts a cross-sectional view of a bulb seal, according to one or more embodiments shown and described herein;
FIG. 1B schematically depicts a perspective view of the bulb seal of FIG. 1A, according to one or more embodiments shown and described herein;
FIG. 2 depicts a flow diagram of a method of manufacturing a bulb seal, according to one or more embodiments shown and described herein;
FIG. 3 schematically molding of a seal in an open configuration, according to one or more embodiments shown and described herein;
FIG. 4 schematically depicts a perspective view of a seal within a mold, according to one or more embodiments shown and described herein;
FIG. 5 schematically depicts a seal in an open configuration, according to one or more embodiments shown and described herein;
FIG. 6 schematically the seal of FIG. 5 having a for applied thereto, according to one or more embodiments shown and described herein;
FIG. 7 schematically depicts the seal of FIG. 5 arranged in a closed configuration within a retention groove, according to one or more embodiments shown and described herein;
FIG. 8 schematically depicts a seal in an open configuration have one or more interlocking devices, according to one or more embodiments shown and described herein; and
FIG. 9 schematically depicts the one or more interlocking devices holding the seal of FIG. 8 in a closed configuration, according to one or more embodiments shown and described herein.

### DETAILED DESCRIPTION

Reference will now be made in detail to various embodiments of bulbs seals and methods of manufacturing the same. Specifically, the methods of manufacturing a bulb seal includes molding a material into an unclosed seal, the unclosed seal comprising a first leg and a second leg connected via a connecting portion, wherein a distal end of each of the first leg and the second leg are spaced from one another. The method further includes removing the unclosed seal from the mold, wherein the first leg and the second leg are configured to be connected to form a bulb seal. As noted herein, manufacture of bulb seals may be particularly challenging as they require specialized extrusion equipment and is not moldable via compression or injection molding processes given the geometry of a traditional bulb seal. However, embodiments provided herein provide for molding an open seal and then performing a subsequent manufacturing step to close the seal to a closed configuration to provide a bulb seal. Accordingly, costly manufacturing processes may be avoided. Moreover, molding procedures as described herein may avoid introduction of impurities and/or local mechanical property changes. Various embodiments and benefits will be described herein with specific reference to the appended drawings.

Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

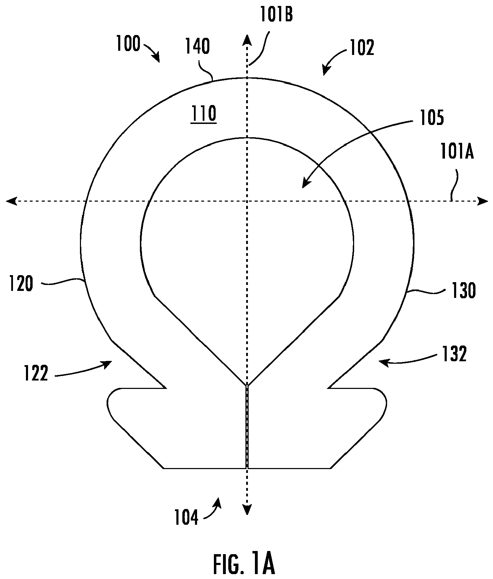

Referring now to FIG. 1A, a cross-sectional view of a bulb seal 100 is shown along a plane defined by a first axis 101A and a second axis 101B. The bulb seal 100 is generally formed of a material 110 that has been shaped into a bulb shape having a bulb seal retention portion 104 and a bulb portion 102. The bulb seal retention portion 104 is configured to be locked into, as will be described in further detail below, a retention groove. The bulb portion 102 extends from the bulb seal retention portion 104, forming a rounded protruding bulbous shape. The bulb portion 102 may generally enclose an air pocket 105, which may assist in providing a water-tight seal. The bulb seal retention portion 104 may couple the bulb seal 100 to an awaiting retention groove such that the bulb portion 102 extends outward from the groove to engage an adjacent surface to form a seal between the retention groove and the adjacent surface to keep, e.g., air, water, other fluids, dust, dirt, etc. from entering a space. For example, the bulb seal 100 may be used for sealing a doorway, a container, a fiber optic enclosure, etc.

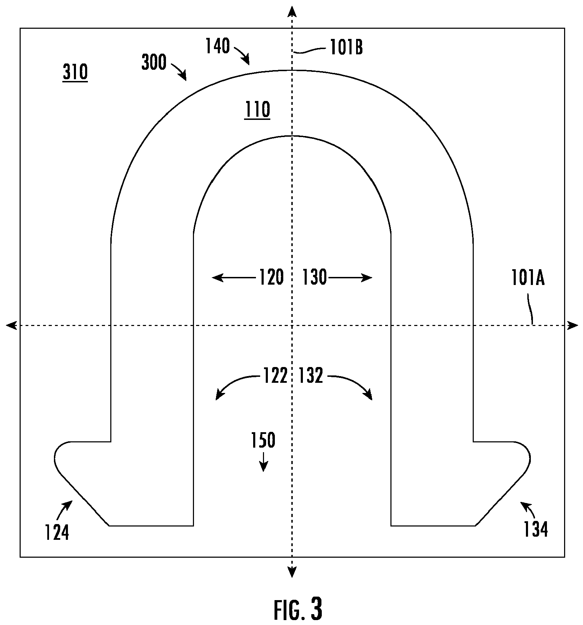

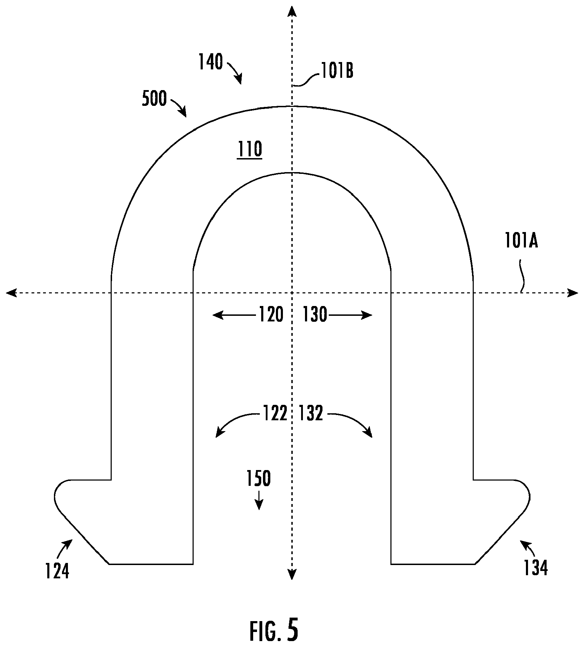

As will be described in greater detail with reference to the methods of manufacturing described below, the bulb seal 100 may generally be defined by a first leg 120 coupled to a second leg 130 such as via a connecting portion 140. When in an unclosed configuration (as generally depicted in FIG. 5), the first leg 120 and the second leg 130 may be uncoupled from one another at a first distal end 122 of the first leg 120 and at a second distal end 132 of the second leg 130. Accordingly, the first leg 120 may be spaced from the second leg 130 at the distal ends 122, 132 (as shown in FIGs. 3 and 5 and described in further detail below). However, the distal ends 122, 132 may be connected in a closed configuration of the bulb seal 100, and the legs 120, 130 may thereby form the bulb seal retention portion 104 at the distal ends 122, 132 and the bulb portion 102 extending from the bulb seal retention portion 104. Accordingly, a juncture between the bulb seal retention portion 104 and the bulb portion 102 may have a reduced width to allow the bulb seal retention portion 104 to be mounted within a groove as will be described in greater detail below.

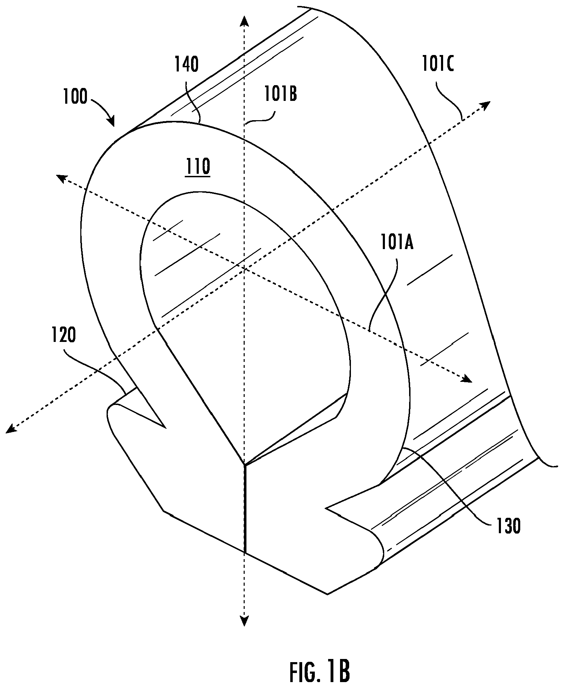

In some embodiments, such as the embodiment of FIG. 1, a bulb portion 102 may have a generally rounded or circular outer and/or inner (e.g., providing the boundaries of the air pocket 105) shape. However, in other embodiments, a bulb portion 102 may have other outer and/or inner shapes that correspond to any number shapes, including any polygonal or nonpolygonal, regular, or irregular shapes (e.g., squares, rectangles, trapezoids).

In embodiments, the material 110 may include any numbers of materials for formation of a seal, such as, but not limited to rubber, polytetrafluoroethylene (PTFE), polyacrylate elastomer, silicone, thermoplastic elastomer, or the like. In some embodiments, the material 110 may comprise a plurality of materials, such as layered or mixed with one another. For example, in some embodiments, the bulb seal retention portion 104 may be formed of a different material than the bulb portion 102. For example, the bulb seal retention portion 104 may be more rigid or less deformable relative to the bulb portion.

Referring now to FIG. 1B, a perspective cross-sectional view of the bulb seal 100 is shown, where the plane defined by the axes 101A, 101B can be seen and where the bulb seal 100 can be seen to be elongate, extending along a third axis 101C. The bulb seal 100 may extend directly along the axis 101C or may also curve, turn, or comprise other geometry (an example of which is depicted in FIG. 3). The embodiment depicted in FIG. 1B is a cut-out (along the plane of the axes 101A, 101B) cross-sectional view, and so, in some embodiments, an end of the bulb seal 100 may not be flat (e.g., cut off as the bulb seal 100 appears in FIG. 1B) but may instead be rounded, may turn, or may otherwise comprise alternative geometry.

Methods of manufacturing will now be described. We note that in embodiments, the bulb seal 100 may be formed in continuous loop and/or in an elongate strand. In the various embodiments described below, the bulb seal 100 is molded within a mold in an open configuration and is later drawn into a closed configuration. For example, embodiments described herein may be molded within a compression mold or injection molded.

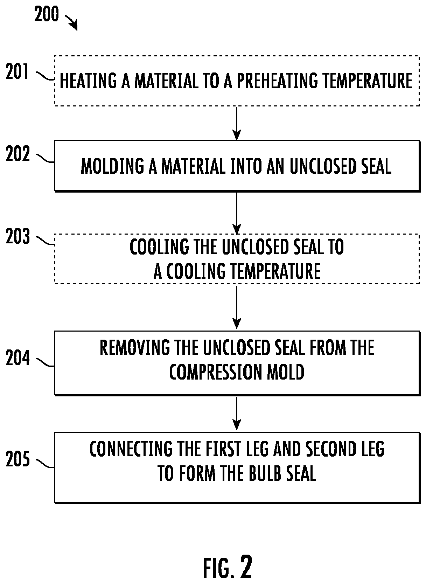

Referring now to FIG. 2, a method 200 of manufacturing a bulb seal is generally depicted. It is noted that the method 200 may include a greater or fewer number of steps, in any order, without departing from the scope of the present disclose.

Still referring to FIG. 2, the method 200 may begin at block 202, with molding, in a mold 310, the material 110, such as schematically depicts in FIG. 3. In particular, as illustrated in FIG. 3, the unclosed seal 300 may be molded to form the first leg 120 and the second leg 130 connected by the connecting portion 140. It is noted that while the connecting portion 140 is shown as curved along its length, in some embodiments the connecting portion 140 may not be curved and may have a more linear configuration. While being molded, the unclosed seal 300 is in an open configuration such that the first distal end 122 of the first leg 120 and the second leg 130 (such as the second distal end 132 of the second leg 130) are spaced apart from one another by a spacing 150.

As noted above, the molding of the material 110 of the unclosed seal 300 may be accomplished via, e.g., compression or injection molding, and, as such, the material 110 may be inserted into the mold 310 in multiple ways. For example, the material 110 may be solid or semisolid when placed into the mold 310, or may, alternatively, be poured or injected into the mold 310, in a liquid or semi-liquid state. To this end, the method 200 may optionally include, at block 201, such as prior to, during, or after inserting the material 110 into the mold, heating the material 110 to a preheating temperature. Such preheating may bring the material 110 to a liquid or semi-liquid state such that the material 110 may be poured or injected into the mold 310. Alternatively (e.g., in embodiments wherein the material 110 is inserted into the mold 310 in a solid or semisolid state), the material 110 may be preheated within the mold 310. In other embodiments, the material 110 may be first heated to a first temperature outside of the mold 310, and then further heated, in the mold 310, to a melting point of the material 110 or otherwise to a temperature at which the material 110 is in a liquid or semi-liquid state. Accordingly, the preheating temperature may be determined based on the material melting point of the material 110 of which the seal is to be formed. In further embodiments, the material 110 may be heated in any device configured to heat the material 110 to such a temperature.

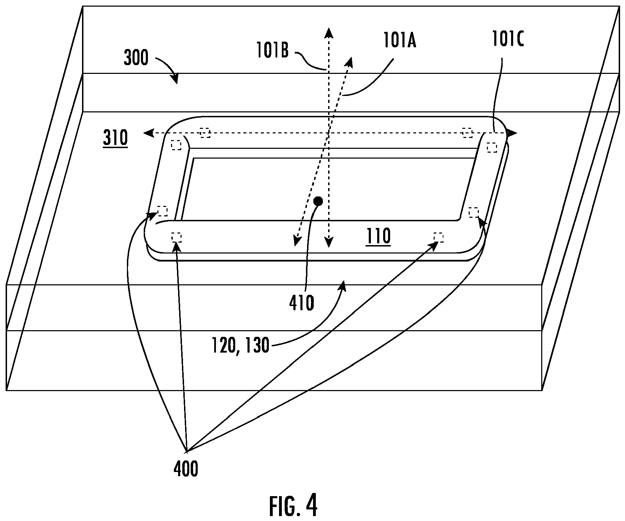

FIG. 4 depicts an external perspective view of the mold 310, with the interior contents of the mold 310 (i.e., the material 110) made visible through an exterior of the mold 310. The mold may define a reces the contours of which provide the shape of the unclosed seal shape. In the embodiment of FIG. 4, the unclosed seal 300 comprises a continuous, rectangular or oblong shape. In other embodiments, the unclosed seal 300 may comprise other shapes with varying lengths, widths, dimensions and orientations, depending on, e.g., an intended end use of the unclosed seal 300 or resulting bulb seal. In the embodiment of FIG. 4, and in other embodiments, the connecting portion 140 is illustrated at the top of the unclosed seal 300 with the first leg 120 and the second leg 130 extending downward from the connecting portion 140. However, in various embodiments, the first leg 120 and the second leg 130 may instead extend inwardly toward a center point 410 of the unclosed seal 300, outwardly, or in another direction, depending on, e.g., an intended end use of the unclosed seal 300 (i.e., the direction towards which the bulb seal retention portion 104 must face).

Referring back to FIG. 2, the method 200 may further include a block 203, cooling the unclosed seal 300 to a cooling temperature, such as within the mold 310. A cooling temperature may be a temperature below the melting point of the material 110 or another temperature at which the unclosed seal 300 may be removed from the mold 310 without unwanted deformation of the material 110. In embodiments, the unclosed seal 300 may cool entirely to a cooling temperature (e.g., room temperature) within the mold 310, may cool partially within the mold 310 to a first cooling temperature and cool further to a second cooling temperature outside of the mold 310, or may cool entirely outside of the mold 310.

Referring back to FIG. 2, and as shown in FIG. 5, the method 200 includes at block 204, removing the unclosed seal 300 from the mold 310. Upon removal from the mold 310, the unclosed seal 300 may be, either immediately or after a waiting time to, e.g., (potentially further) cool the unclosed seal 300, configurable to form the bulb seal 100. In particular, the first leg 120 and the second leg 130 are movable from the unclosed configuration such as illustrated in FIG. 5 to a closed configuration illustrated in FIGS. 1A and 1B to form the bulb seal 100.

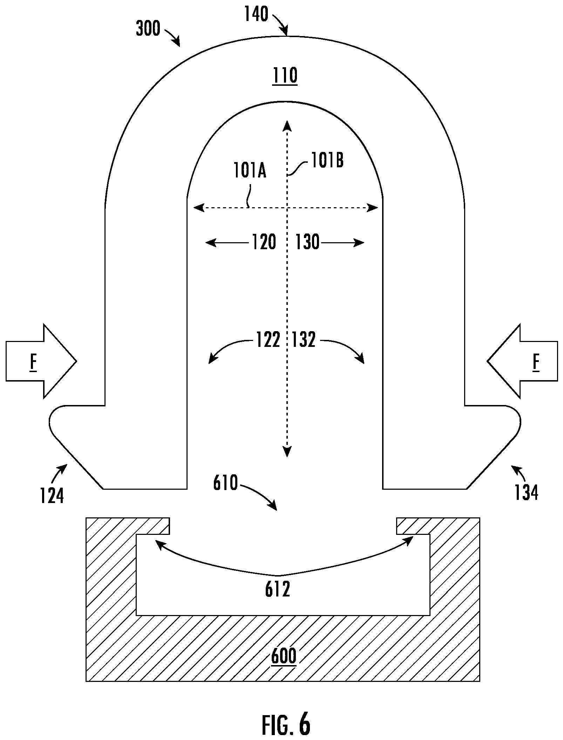

Referring back to FIG. 2, and as shown in FIGS. 6-7, the method 200 may include, at block 205, connecting the first leg 120 and the second leg 130 to form the bulb seal 100, so as to form the bulb seal retention portion 104 and the bulb portion 102 extending from the bulb seal retention portion 104. The connecting of the first leg 120 and the second leg 130 may comprise compressing together a first foot 124 formed at a distal end 122 of the first leg 120 and a second foot 134 formed at a distal end 132 of the second leg 120 and forming a bulb portion 102 (defining the bulb shape) of proximal portions of the first leg 120 and the second leg 130 and connecting portion, 140. To form the bulb seal retention portion 104, the first foot 124 and the second foot 134 may each have an increased transverse dimension relative to a proximal portion of a respective one of the legs 120, 130, such that the feet 124, 134 (and the resulting bulb seal retention portion 104) may be sized to be locked into a retention groove.

As shown in FIG. 6, connecting the first leg 120 and the second leg 130 may include applying a compressing force F upon each of the first distal end 122 and the second distal end 132 (e.g., or the first foot 124 and the second foot 134) to draw each of the distal ends 122, 132 (e.g., the first foot 124 and the second foot 134) toward each other. In embodiments, to reduce the necessary magnitude of the compressing force to connect the first leg 120 and the second leg 130, each the legs 120, 130 may comprise a compressing region having a thinner cross-section than other regions of the legs 120, 130. The compressing region's thinner cross-section may reduce the necessary magnitude of a compressing force by, e.g., reducing the rigidity of each of the legs 120, 130 within the compressing region. In further embodiments, the compressing region may be positioned abutting a respective one of the feet 124, 134 on a side of the feet 124, 134 nearer to the connecting portion 140.

The compressing force F may be provided by any mechanism or mechanisms (e.g., a clamp, manual strength, etc.) which may provide a compressing force of a sufficient magnitude to connect the first leg 120 and the second leg 130. In some embodiments, to maintain the unclosed seal 300 in the closed configuration, thereby providing a bulb seal, the bulb seal retention portion 104 may be positioned within a retention groove, such as retention groove 600. Accordingly, in some embodiments the compressing force to maintain the closed configuration may be provided, at least in part, by a retention groove 600, such as by inserting one of the distal ends 122, 132 (forming the bulb seal retention portion 104) into the retention groove 600. The retention groove 600 may define a slot 610 and have retention flanges 612 extending over the slot 610, such that the retention flanges 612 restrict vertical movement of the bulb seal retention portion 104 from the slot 610. In embodiments, the slot 610 may be used to move the unclosed seal 300 into the closed configuration. For example, either of the distal ends 122, 132 (e.g., the feet 124, 134) may be inserted into the retention groove 600 by, e.g., inserting the first distal end 122 into the slot 610 of the retention groove 600 and by using the retention groove 600 as a fulcrum against which an external mechanism provides a force to compress the legs 120, 130, thereby connecting the first leg 120 and the second leg 130 together.

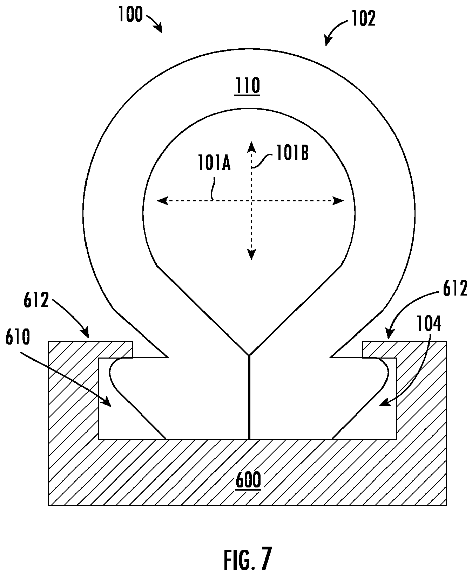

Once connected, the rigidity of the material 110 may impart upon each of the legs 120, 130 a corrective force which biases each of the legs 120, 130 away from each other. As such, to remain in the form of the bulb seal 100, the legs 120, 130 may need to remain subject to a connecting force (e.g., a compressing force or a pulling force). As shown in FIG. 7, connecting the first leg 120 to the second leg 130 may comprise inserting the distal ends 122, 132 into the retention groove 600. The retention groove 600 may thereby impart upon the legs 120, 130 the compressing force to maintain the closed configuration. Additionally, compressing together the first foot 124 and the second foot 134 forms the bulb seal retention portion 104. The bulb seal retention portion 104 (and, similarly, the feet 124, 134) are configured to lock the bulb seal 100 into the retention groove 600 by occupying a slot 610 of the retention groove 600. As noted above, compressing together the first foot 124 and the second foot 134 may also form the bulb portion 102 such as of proximal portions of the first leg 120 and the second leg 130.

The retention groove 600 and retention flanges 612 accordingly may impart a compressing force upon the legs 120, 130 to maintain the closed configuration. The retention groove 600 may be formed along an opening such as for a door, lid, or the like such that the bulb seal 100 is positioned to seal the opening (such as when the door or lid is closed) to keep e.g., air, water, other fluid, debris, or dust from entering a space enclosed by the door or lid. For example, the bulb portion 102 of the bulb seal 100 may be compressed against between abutting surfaces to form the seal.

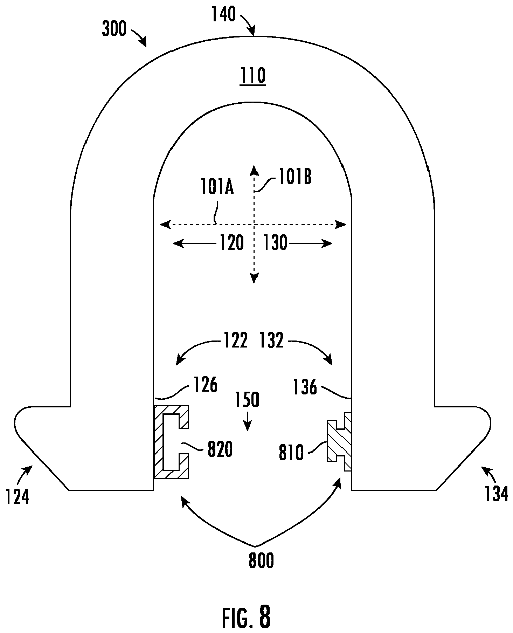

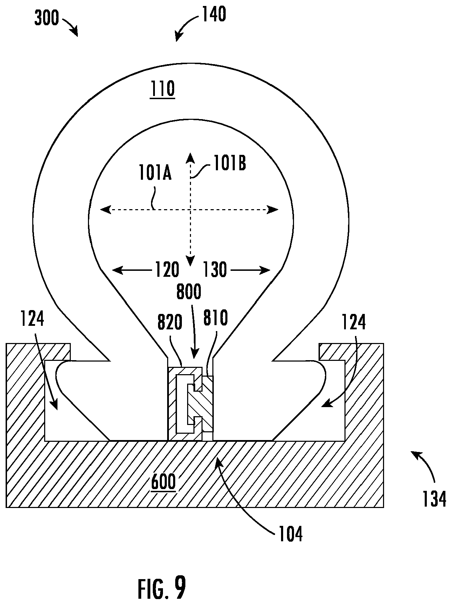

In embodiments, in addition to or in lieu of the retention groove 600 described above, the corrective force biasing the legs 120, 130 to the open or unclosed configuration one or more interlocking devices may be used to lock or maintain the legs 120, 130 in the closed configuration. For example, as shown in FIGs. 8 and 9, in embodiments, the unclosed seal 300 further comprises an interlock 800 for interlocking the first leg 120 and the second leg 130. In embodiments, the interlock 800 includes a first interlocking device 810 (e.g., a plug, extension, etc.) coupled to the first leg 120 and a second interlocking device 820 (e.g., a slot housing, socket housing, etc.) coupled to the second leg 130. The first interlocking device 810 is configured to couple with the second interlocking device 820, such as by inserting a plug of the first interlocking device 810 into a slot (such as formed within a slot housing) of the second interlocking device 820, and where the second interlocking device 820 subsequently inhibits the release of the first interlocking device 810 from the second interlocking device 820. As such, connecting the first leg 120 to the second leg 130 may comprise interlocking the first leg 120 and the second leg 130 via coupling the first interlocking device 810 to the second interlocking device 820. The first interlocking device 810 may be positioned on a first interior side 126 of the first leg 120 (such as along the first distal end 122 or along the first foot 124), and the second interlocking device 820 is positioned on a second interior side 136 of the second leg 130 (such as along the second distal end 132 or along the second foot 134). In embodiments, connecting the first leg 120 to the second leg 130 may thereby further include coupling the first interlocking device 810 to the second interlocking device 820, and, in such embodiments, the interlock 800 may, separately of or in addition to an external mechanism (e.g., the retention groove 600), counteract the biasing force of the bulb seal 100.

The first interlocking device 810 and the second interlocking device 820 may be positioned on the respective interior sides 126, 136 by a variety of mechanisms. For example, in embodiments, the first interlocking device 810 may be adhered to the first interior side 126 and the second interlocking device 820 may be adhered to the second interior side 136 by, e.g., a chemical adhesive, welding, or melting of the first interlocking device 810 to the first interior side 126 and of the second interlocking device 820 to the second interior side 136. In some embodiments, the first interlocking device 810 may be a plug, and the second interlocking device 820 may be a slot which may be formed within the second leg 130 and/or provided via a separate housing mounted to the second leg 130. In such embodiments, molding the material into the unclosed seal 300 may comprise forming the plug on the first interior side 126 and forming the slot on the second interior side 136. In alternative embodiments, the interlock 800 may instead comprise other interlocking mechanisms such as interlocking hoops, hooks, clamps, etc. Such devices may be positioned on the respective interior sides 126, 136 by a variety of mechanisms such as adhering, molding, etc.

In embodiments, the interlock 800 may comprise a plastic, the material, a combination thereof, or another suitable material.

In embodiments, the interlock 800 may span an entire length of the bulb seal 100 (i.e., extending along the axis 101C in FIG. 4). In other embodiments, and as shown in FIG. 4, the bulb seal 100 may comprise a plurality of interlocks 800, and the interlocks 800 may alternatively be located at one or more discrete positions along the bulb seal 100, such as at positions 400. The positions 400 may be, e.g., chosen at random, evenly dispersed along a length of the bulb seal 100, or, as shown in the embodiment of FIG. 4, positioned near turns or corners of the bulb seal 100. Turns or corners of the bulb seal 100 may cause parts of the legs 120, 130 near the turn to experience greater corrective forces, thereby requiring greater counteracting forces, which may be provided by one or more interlocking devices provided herein.

Embodiments of the present disclosure may be further described with respect to the following numbered clauses:
(1) A method for manufacturing a seal comprises molding a material into an unclosed seal, the unclosed seal comprising a first leg and a second leg connected via a connecting portion, wherein a distal end of each of the first leg and the second leg are spaced from one another; and removing the unclosed seal from the mold, wherein the first leg and the second leg are configured to be connected to form a bulb seal.
(2) The method of clause (1) may further comprise connecting the first leg and the second leg to form the bulb seal comprising a bulb seal retention portion and a bulb portion extending from the bulb seal retention portion.
(3) The method of clause (2) may further comprise the connecting the first leg and the second leg comprising connecting a first foot formed at the distal end of the first leg to a second foot formed at the distal end of the second leg, the first foot and the second foot each having an increased transverse dimension relative to a proximal portion of the first leg and the second leg.
(4) The method of clause (3) may further comprise the connecting of the first leg to the second leg further comprising compressing together the first foot and the second foot and forming a bulb portion of each proximal portion of the first leg and the second leg.
(5) The method of clause (2) or clause (3) may further comprise the connecting of the first leg to the second leg further comprising inserting the distal end of the first leg and the distal end of the second leg into a retention groove.
(6) The method of any one of clauses (1)-(5) may further comprise the connecting the first leg to the second leg comprising interlocking the first leg and the second leg via coupling a first interlocking device coupled to the first leg and a second interlocking device coupled to the second leg.
(7) The method of any one of clauses (1)-(6) may further comprise the molding the material into the unclosed seal comprising compression molding or injection molding the unclosed seal.
(8) The method of any one of clauses (1)-(7) may further comprise the molding the material into the unclosed seal comprising forming a plug on a first interior side of the first leg and forming a slot on the second interior side of the second leg.
(9) The method of clause (8) may further comprise the connecting the first leg and the second leg to form the bulb seal further comprising coupling the plug to the slot.
(10) A method for manufacturing a seal comprises: molding a material into an unclosed seal via compression molding, the unclosed seal comprising a first leg and a second leg connected via a connecting portion, wherein a distal end of each of the first leg and the second leg are spaced from one another; removing the unclosed seal from the mold; and connecting the first leg and the second leg to form a bulb seal.
(11) The method of clause (10) may further comprise the unclosed seal further comprising a first foot formed at the distal end of the first leg and a second foot formed at the distal end of the second leg, wherein the first foot and the second foot comprise an increased transverse dimension relative to a proximal portion of the first leg and the second leg.
(12) The method of clause (11) may further comprise the connecting of the first leg to the second leg further comprising compressing together the first foot and the second foot and forming a bulb portion of each proximal portion of the first leg and the second leg.
(13) The method of clause (12) may further comprise the connecting of the first leg to the second leg further comprising inserting the distal end of the first leg and the distal end of the second leg into a retention groove.
(14) A bulb seal comprises: a first leg; and a second leg connected to the first leg via a connecting portion, wherein the first leg and the second leg are movable from an unclosed configuration in which a distal end of the first leg is uncoupled to the second leg and a closed configuration in which the distal end of the first leg is coupled to the second leg, thereby defining a bulb seal retention portion and a bulb portion.
(15) The bulb seal of clause (14) may further comprise: the first leg comprising a first foot formed at the distal end of the first leg; the second leg comprising a second foot formed at a distal end of the second leg; and the first and second feet comprising an increased transverse dimension relative to a proximal portion of the first leg and the second leg.
(16) The bulb seal of clause (15) may further comprise the bulb seal retention portion comprising the first foot and the second foot.
(17) The bulb seal of any one of clauses (14)-(16) may further comprise a first interlocking device coupled to the first leg and a second interlocking device coupled to a second leg.
(18) The bulb seal of clause (17) may further comprise the first interlocking device is a plug and wherein the second interlocking device is a slot.
(19) The bulb seal of clause (17), wherein the first interlocking device is adhered to the first leg and wherein the second interlocking device is adhered to the second leg.
(20) The bulb seal of clause (17), wherein the first interlocking device is formed on the first leg and wherein the second interlocking device is formed on the second leg.

It should now be understood that the methods and seals described herein disclose a bulb-type seal which may be manufactured via injection and/or compression molding thereby improving ease and costs of manufacture. In particular, embodiments of the present disclosure are directed to molding a seal in an open configuration than that may then be moved to a closed configuration thereby providing a bulb seal.

It will be apparent to those skilled in the art that various modifications and variations may be made to the embodiments described herein without departing from the spirit and scope of the claimed subject matter. Thus, it is intended that the specification cover the modifications and variations of the various embodiments described herein provided such modification and variations come within the scope of the appended claims and their equivalents.

## Claims

1. A method for manufacturing a seal, the method comprising:
molding a material into an unclosed seal, the unclosed seal comprising a first leg and a second leg connected via a connecting portion, wherein a distal end of each of the first leg and the second leg are spaced from one another; and
removing the unclosed seal from the mold, wherein the first leg and the second leg are configured to be connected to form a bulb seal.

2. The method of claim 1, further comprising connecting the first leg and the second leg to form the bulb seal comprising a bulb seal retention portion and a bulb portion extending from the bulb seal retention portion.

3. The method of claim 2, wherein connecting the first leg and the second leg comprises connecting a first foot formed at the distal end of the first leg to a second foot formed at the distal end of the second leg, the first foot and the second foot each having an increased transverse dimension relative to a proximal portion of the first leg and the second leg.

4. The method of claim 3, wherein connecting of the first leg to the second leg further comprises compressing together the first foot and the second foot and forming a bulb portion of each proximal portion of the first leg and the second leg.

5. The method of claim 2, wherein connecting of the first leg to the second leg further comprises inserting the distal end of the first leg and the distal end of the second leg into a retention groove.

6. The method of any one of claims 1-5, wherein connecting the first leg to the second leg comprises interlocking the first leg and the second leg via coupling a first interlocking device coupled to the first leg and a second interlocking device coupled to the second leg.

7. The method of any one of claims 1-6, wherein molding the material into the unclosed seal comprises compression molding or injection molding the unclosed seal.

8. The method of any one of claims 1-7, wherein molding the material into the unclosed seal comprises forming a plug on a first interior side of the first leg and forming a slot on the second interior side of the second leg.

9. The method of claim 8, wherein connecting the first leg and the second leg to form the bulb seal further comprises coupling the plug to the slot.

10. A bulb seal comprising:
a first leg; and
a second leg connected to the first leg via a connecting portion, wherein the first leg and the second leg are movable from an unclosed configuration in which a distal end of the first leg is uncoupled to the second leg and a closed configuration in which the distal end of the first leg is coupled to the second leg, thereby defining a bulb seal retention portion and a bulb portion.

11. The bulb seal of claim 10, wherein:
the first leg comprises a first foot formed at the distal end of the first leg;
the second leg comprises a second foot formed at a distal end of the second leg; and
the first and second feet comprise an increased transverse dimension relative to a proximal portion of the first leg and the second leg.
